# EUROPÄISCHE PATENTSCHRIFT

(11) **EP 1 384 101 B1**
(45) Veröffentlichungstag und Bekanntmachung des Hinweises auf die Patenterteilung: **21.02.2007**
(21) Anmeldenummer: 01936031.2
(22) Anmeldetag: 30.04.2001
(51) Int. Cl.: G02B 6/34

(54) **ANORDNUNG ZUM MULTIPLEXEN UND/ODER DEMULTIPLEXEN DER SIGNALE MINDESTENS ZWEIER OPTISCHER WELLENLÄNGENKANÄLE**
ARRANGEMENT FOR MULTIPLEXING AND/OR DEMULTIPLEXING THE SIGNALS OF AT LEAST TWO OPTICAL WAVELENGTH CHANNELS
SYSTEME POUR MULTIPLEXER ET/OU DEMULTIPLEXER LES SIGNAUX D'AU MOINS DEUX CANAUX DE LONGUEURS D'ONDE OPTIQUES

(43) Veröffentlichungstag der Anmeldung: 28.01.2004
(73) Patentinhaber: Finisar Corporation, Sunnyvale, CA 94089 (US)
(72) Erfinder: ALBRECHT, Helmut, 81377 München (DE); BAUMANN, Ingo, 85604 Zorneding (DE); HEISE, Gerhard, 85579 Neubiberg (DE); GAO, Zhan, 81739 München (DE)
(74) Vertreter: Müller, Wolfram Hubertus
(86) Internationale Anmeldenummer: PCT/DE2001/001670
(87) Internationale Veröffentlichungsnummer: WO 2002/088808

(56) Entgegenhaltungen:
- DE-A- 19 815 404
- FR-A- 2 742 882
- US-A- 5 412 744
- US-A- 5 732 171
- SOOLE J B D ET AL: "USE OF MULTIMODE INTERFERENCE COUPLERS TO BROADEN THE PASSBAND OF WAVELENGTH-DISPERSIVE INTEGRATED WDM FILTERS" IEEE PHOTONICS TECHNOLOGY LETTERS, IEEE INC. NEW YORK, US, Bd. 8, Nr. 10, 1. Oktober 1996 (1996-10-01), Seiten 1340-1342, XP000628952 ISSN: 1041-1135 in der Anmeldung erwähnt
- OKAMOTO K.; SUGITA A.: 'Flat spectral response arrayed-waveguide grating multiplexer with parabolic waveguide horns' ELECTRONICS LETTERS Bd. 32, Nr. 18, 29 August 1996, Seiten 1661 - 1662, XP006005618

## Beschreibung

Die Erfindung betrifft eine Anordnung zum Multiplexen und/oder Demultiplexen der Signale mindestens zweier optischer Wellenlängenkanäle nach dem Oberbegriff des Anspruchs 1.

Eine auch als "arrayed waveguide grating" (AWG) bezeichnete bekannte Multiplex/Demultiplex-Anordnung ist beispielsweise aus der WO-A-96/00915 bekannt. Die dort beschriebene Anordnung weist eine Gittereinrichtung, die sowohl zur Trennung als auch Zusammenführung der Wellenlängenkanäle verwendet ist, ein optisches Gitter, einen optischen Freistrahlbereich, der zwischen dem allen Kanälen gemeinsam zugeordneten Raumpunkt und dem Gitter angeordnet ist, und einen optischen Freistrahlbereich, der zwischen dem Gitter und jedem einem Kanal allein zugeordneten Raumpunkt angeordnet ist, auf.

Bei einer besonderen derartigen Ausführungsform besteht das Gitter aus einem Phased-Array, d.h. aus mehreren streifenartigen optischen Wellenleitern, deren jeder
- je eine Endfläche, die dem allen Kanälen gemeinsam zugeordneten Raumpunkt zugekehrt ist,
- je eine andere Endfläche, die den Raumpunkten, deren jeder je einem Kanal allein zugeordnet ist, zugekehrt ist, und
- je eine optische Länge zwischen der einen und anderen Endfläche, die von Wellenleiter zu Wellenleiter variiert, aufweist.

Wird die besondere Ausführungsform als Demultiplexer betrieben, bei dem die Kanäle räumlich getrennt werden, bilden die einen Endflächen der Wellenleiter des Phased-Array Eintrittsöffnungen des Gitters und die anderen Endflächen dieser Wellenleiter Austrittsöffnungen des Gitters. Beim Betrieb dieser Ausführungsform als Multiplexer, bei dem die räumlich getrennten Kanäle zusammengeführt werden, bilden die anderen Endflächen der Wellenleiter des Phased-Array Eintrittsöffnungen des Gitters und die einen Endflächen dieser Wellenleiter Austrittsöffnungen des Gitters. Die Wellenleiter des Phased-Array wirken in jedem Fall als optisches Phasengitter.

Anstelle eines Gitters in Form eines Phased Array können auch andere optische Gitter, beispielsweise geätzte Gitter verwendet werden (siehe IEEE, Photonics Technology Lett., Vol. 8, Nr. 10, Okt. 1996, S. 1340 bis 1342).

Die Gittereinrichtung einer derartigen Anordnung bestimmt eine wellenlängenabhängige Transmissionsfunktion jedes streifenartigen optischen Wellenleiters, der einem Kanal allein und/oder allen Kanälen gemeinsam zugeordnet ist und eine Endfläche aufweist, die der Gittereinrichtung zugekehrt und bei dem Raumpunkt angeordnet ist, welcher dem einen Kanal allein bzw. allen Kanälen gemeinsam zugeordnet ist. Diese Transmissionsfunktion ist zumindest in erster Näherung eine Gauß-Funktion (siehe erwähntes Dokument IEEE).

Günstiger wäre ein mehr rechteckförmiger Verlauf der wellenlängenabhängigen Transmissionsfunktion eines solchen Wellenleiters, damit in einem bestimmten Wellenlängenbereich bei Schwankungen der Umgebungstemperatur und/oder Wellenlänge der sich die Einfügedämpfung dieses Wellenleiters nur unwesentlich ändert.

Um die inhärente Gauß-ähnlichen Transmissionsfunktion eines solchen Wellenleiters einzuflachen, d.h. mehr rechteckförmig zu gestalten, sind verschiedene Möglichkeiten beschrieben geworden.

So ist es aus Electr. Lett., 30, 1994, S. 300-301 bekannt, den einem Kanal allein zugeordneten Wellenleiter zur Einflachung dessen Transmissionsfunktion nicht wie üblich als Monomodewellenleiter, sondern als Multimodewellenleiter auszubilden.

Aus Proc. ECOC, Birmingham 1997, Conference Publication No. 448, IEE 1997, S. 79.82 ist es bekannt, zwei leicht unterschiedliche Phased Arrays miteinander zu verschachteln, so daß sich bei dem einem Kanal allein zugeordneten Raumpunkt der Anordnung zwei spektral gezielt verschobene Gauß-ähnliche Transmissionsfunktionen zu einer breiteren abgeflachten Transmissionsfunktion überlagern.

Auch ist es bekannt, eine Anordnung so auszubilden, daß bei dem allen Kanälen gemeinsam zugeordneten Raumpunkt der Anordnung zwei sich überlappende Gauß-ähnliche Transmissionsfunktionen vorliegen, die mit einem 3-dB-Strahlteiler (siehe US-A-5 412 744), mit einem sog. "Multimode-Interference"-Koppler (siehe erwähntes Dokument IEEE) und/oder mit einer sog. "Horn"-Struktur (siehe Electr. Lett. 32, 1996, S. 1661-1662) realisiert werden können. Die bei diesem Raumpunkt erzeugte eingeflachte Transmissionsfunktion in Form der beiden sich überlappenden Gauß-ähnliche Transmissionsfunktionen wird von der Gittereinrichtung auf jeden Raumpunkt der Anordnung abgebildet, der einem Kanal allein zugeordnet ist.

Bei den drei zuletzt erwähnten Realisierungen ist der entscheidende Vorgang der Einflachung die Bildung eines Faltungsintegrals aus einer elektrischen Feldverteilung gemäß der sich überlappenden Gauß-ähnlichen Transmissionsfunktionen mit der Gauß-förmigen Mode jedes einem Kanal allein zugeordneten Wellenleiters Anordnung.

Aus Optics Lett. 20, 1995, S. 43-45 ist es bekannt, die elektrische Feldverteilung bei den die Austrittsöffnungen des Gitters bildenden anderen Endflächen der Wellenleiter des Phased Array zu ändern. Grundlage dieser Realisierung ist, daß der zwischen diesen Endflächen und den je einem Kanal allein zugeordneten separaten Raumpunkten angeordnete Freistrahlbereich Linsenwirkung aufweist und damit die elektrische Feldverteilung bei diesen Endflächen und die elektrische Feldverteilung bei diesen separaten Raumpunkten über eine Fourier-Transformation verknüpft sind. Durch eine geeignete Wahl des Querschnitts der Wellenleiter des Phased Arrays und einer zusätzlichen Änderung der optischen Länge dieser Wellenleiter kann bei den anderen Endflächen dieser Wellenleiter eine elektrische Feldverteilung mit entsprechend einer sin(x)/x-Funktion erzeugt werden, die durch die Fourier-Transformation in eine rechteckförmige Feldverteilung bei einem separaten Raumpunkten überführt wird.

Die Druckschrift WO-A-99/52003 beschreibt eine Anordnung zur räumlichen Trennung und/oder Zusammenführung zumindest zweier optischer Wellenlängenkanäle mit einer optischen Phased-Array-Einrichtung, die eine Einrichtung zur Erzeugung einer Schwächungsfunktion für eine wellenlängenabhängige Schwächung der Transmissionsfunktion zumindest eines der Wellenleiter aufweist. Es erfolgt somit eine Subtraktion einer geeigneten Feldverteilung von der Feldverteilung des unbeeinflußten Phased Arrays. Dies führt zu einem Abschneiden des oberen Teils der Transmissionskurve.

Aus der gattungsbildenden Druckschrift K. OKAMOTO, A. SUGITA: "Flat spectral response arrayed-waveguide grating multiplexer with parabolic waveguide horns" ELECTRONICS LETTERS, Bd. 32, Nr. 18, 29. August 1996 (1996-08-29), Seiten 1661-1662, XP006005618, ist ein N X N Arrayed-Waveguide Grating (AWG) Mulitplexer bekannt, der Kopplungsmittel zur Ein- oder Auskopplung von Licht aller Kanäle in einen ersten Freistrahlbereich aufweist. Die Kopplungsmittel umfassen dabei einen Wellenleiter, der im Bereich der Ankopplung an den ersten Freistrahlbereich einen erhöhten Kerndurchmesser aufweist.

Der Erfindung liegt die Aufgabe zugrunde, eine einfach zu realisierende Anordnung zum Multiplexen und/oder Demultiplexen der Signale mindestens zweier optischer Wellenlängenkanäle entsprechend der eingangs genannten Art zur Verfügung zu stellen, die durch eine spezielle Ausgestaltung des Eingangswellenleiters und der Ankopplung des Eingangswellenleiters in den ersten Freistrahlbereich einen rechteckförmigeren bzw. flacheren Verlauf der Filterkurven für die einzelnen Wellenlängen bereitstellt.

Diese Aufgabe wird erfindungsgemäß durch eine Anordnung mit den Merkmalen des Anspruchs 1 gelöst. Bevorzugte und vorteilhafte Ausgestaltungen der Erfindung sind in den Unteransprüchen angegeben.

Danach zeichnet sich die erfindungsgemäße Lösung dadurch aus, daß die Kopplungsmittel zur Ein- oder Auskopplung von Licht aller Kanäle in den ersten Freistrahlbereich zumindest in der Ebene des Freistrahlbereichs eine Abflachung und/oder Verbreiterung der Feldverteilung des ein- oder ausgekoppelten Lichts bewirken. Im Bereich des allen Kanälen zugeordneten Raumbereich der Anordnung liegt somit eine abgeflachte bzw. verbreiterte Feldverteilung (Eingangs-Feldverteilung) vor.
Die Kopplungsmittel umfassen einen Wellenleiter, der im Bereich der Ankopplung an den ersten Freistrahlbereich einen erhöhten Kerndurchmesser aufweist. Dabei ist der erste Freistrahlbereich an einer Substratkante angeordnet und der Wellenleiter der Kopplungsmittel durch eine externe Glasfaser gebildet, die mit der Substratkante gekoppelt ist.

Da die Anordnung bezüglich der ersten und der zweiten Freistrahlbereichs spiegelbildlich ist, wird eine verbreiterte Eingangsfeld-Verteilung im ersten Freistrahlbereich auf den Ausgang des zweiten Freistrahlbereichs abgebildet, an dem jedem Wellenlängenkanal ein eigener Raumbereich zugeordnet ist. Es liegt somit eine Feldabflachung bzw. -verbreiterung auch in den Raumbereichen des zweiten Freistrahlbereichs vor, die jeweils einem Kanal allein zugeordnet sind.

Damit weist die Filterkurve für die einzelnen Wellenlängen jeweils einen rechteckförmigeren bzw. flacheren Verlauf auf. Dadurch ändert sich die Einfügedämpfung bei Schwankungen der Umgebungstemperatur und/oder der Wellenlänge der Laserstrahlung in einem relativ großen Wellenlängenbereich nur unwesentlich.

Die Erfindung beruht auf dem Gedanken, eine Verbreiterung der Filterkurven der Multiplexer/Demultiplexer-Anordnung nicht durch Maßnahmen am eigentlichen Multiplexer/Demultiplexer vorzunehmen, sondern durch Maßnahmen, die die Eingangs-Feldverteilung (bzw. Ausgangsverteilung) verändern bzw. verbreitern. Hierdurch ist es nicht erforderlich, die Geometrie und Ausführung des eigentlichen Multiplexers/Demultiplexers zu verändern. Das in seiner Bandbreite vergrößerte bzw. abgeflachte Eingangssignal wird durch den Multiplexer/Demultiplexer symmetrisch auf den Ausgang abgebildet.

Gemäß der Erfindung umfassen die Kopplungsmittel einen Wellenleiter, der im Bereich der Ankopplung an den ersten Freistrahlbereich einen erhöhten Kerndurchmesser aufweist. Dies bedeutet, daß der Modenfelddurchmesser des Wellenleiters für das ein- oder ausgekoppelte Licht gegenüber dem Modenfelddurchmesser einer Monomode-Faser verbreitert ist, was zu einer verbreiterten räumlichen Eingangs-Feldverteilung führt. Dementsprechend ist die Filterkurve für die einzelnen Wellenlängen ebenfalls verbreitert.

Bevorzugt weist der Wellenleiter im Bereich vor der Ankopplung an den ersten Freistrahlbereich dabei eine kontinuierliche Vergrößerung des Kerndurchmessers auf (Taper-Faser). Eine Verbreiterung des Kerndurchmessers wird beispielsweise durch Erhitzen und/oder Stauchen und/oder Aufquellen eines Monomode-Wellenleiters erzeugt.

Vorzugsweise weist der Wellenleiter zwei parallele, zueinander beabstandete Wellenleiterkerne auf, die beide mit dem ersten Freistrahlbereich gekoppelt sind. Die Gauß-Funktionen der beiden Wellenleiterkerne sind dabei räumlich leicht gegeneinander verschoben und überlagern sich zu einer verbreiterten Gauß-Funktion als Eingangs-Feldverteilung, die von der optischen Gittereinrichtung auf den Ausgang des zweiten Freistrahlbereichs abgebildet wird. Die beiden Kerne weisen dabei bevorzugt einen Abstand von 10 bis 20 µm auf.

Vorzugsweise weist der Wellenleiter einen elliptischen Kern auf, der ebenfalls zu einer Verbreiterung der Eingangs-Feldverteilung im ersten Freistrahlbereich führt.

Der erste Freistrahlbereich der Anordnung ist erfindungsgemäß an einer Substratkante angeordnet. Da eine Änderung der Eingangs-Feldverteilung des ersten Freistrahlbereichs allein auf Maßnahmen zurückgeht, die in den Mitteln zur Ein- oder Auskoppeln von Licht (optische Einkoppelvorrichtung) erfolgen, ist mit Vorteil eine Änderung oder Anpassung der auf dem Substrat ausgebildeten optischen Gittereinrichtung nicht erforderlich.

Die Erfindung wird nachfolgend unter Bezugnahme auf die Figuren der Zeichnung anhand mehrerer Ausführungsbeispiele näher erläutert. Es zeigen:
- Figur 1a: eine erfindungsgemäße Einkoppelvorrichtung zur Ein- bzw. Auskopplung von Licht in einen Multiplexer/Demultiplexer, wobei die Einkoppelvorrichtung eine Glasfaser mit einem verbreiterten Kerndurchmesser aufweist,
- Figur 1b: eine Einkoppelvorrichtung mit einer Glasfaser, die einen Standard-Kerndurchmesser aufweist,
- Figur 2: die Filterkurve eines Multiplexers/Demultiplexers mit einer Einkoppelvorrichtung gemäß Figuren 1a und 1b für einen Kanal;
- Figur 3a: eine zweite Ausführungsform einer erfindungsgemäßen Einkoppelvorrichtung, wobei die Einkoppelvorrichtung eine Glasfaser mit einem doppelten Kern aufweist,
- Figur 3b: die Feldverteilung am Ausgang der Glasfaser der Figur 3a,
- Figur 4: eine dritte Ausführungsform einer erfindungsgemäßen Einkoppelvorrichtung, wobei die Einkoppelvorrichtung eine Glasfaser mit einem elliptischen Kern aufweist,
- Figur 5: eine vierte Ausführungsform einer erfindungsgemäßen Einkoppelvorrichtung, wobei die Einkoppelvorrichtung einen Y-Verzweiger aufweist,
- Figur 6: eine Draufsicht auf einen optischen Multiplexer/Demutliplexer gemäß dem Stand der Technik;
- Figur 7: in vergrößerter Darstellung den Ausschnitt A der Figur 6,
- Figur 8: in vergrößerter Darstellung den Ausschnitt B der Figur 6, und
- Figur 9: typische wellenlängenabhängige Transmissionsfunktionen pro Kanal bei der Anordnung der Figur 6.

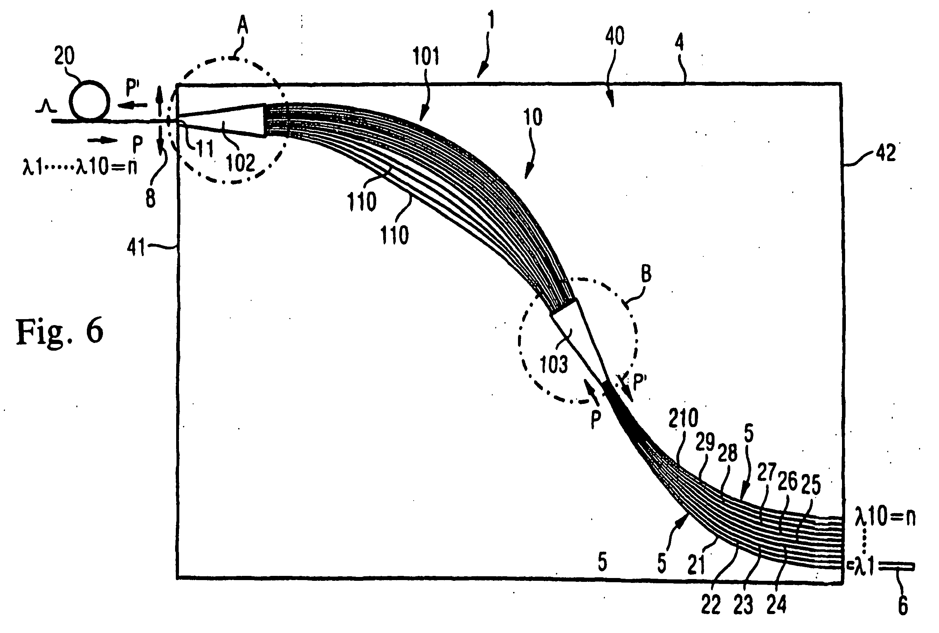

Zunächst wird anhand der Figur 6 bis 9 zum besseren Verständnis der Erfindung eine im Stand der Technik bekannte Anordnung zur räumlichen Trennung und/oder Zusammenführung mehrerer optischer Wellenlängenkanäle (Multiplexer/Demultiplexer) beschrieben. Die in diesen Figuren dargestellte Ausführungsbeispiel einer Anordnung gemäß dem Stand der Technik entspricht der in der WO-A-96/00915 und der WO-A-99/52003 beschriebenen Anordnung zur räumlichen Trennung und/oder Zusammenführung mehrerer optischer Wellenlängenkanäle λ1, λ2, ... λn, auf die ergänzend verwiesen wird.

Danach sind bei dem in Figur 6 dargestellten Ausführungsbeispiel auf der Oberfläche 40 eines Substrats 4 zwischen einer Substratkante 41 und einer dazu im wesentlichen parallelen anderen Substratkante 42
- ein der einen Substratkante 41 zugeordneter optischer Freistrahlbereich 102 in Form eines Schichtwellenleiters und ein von diesem Schichtwellenleiter 102 räumlich getrennter und der anderen Substratkante 42 zugeordneter optischer Freistrahlbereich in Form eines anderen Schichtwellenleiter 103,
- eine optische Phasenschieberanordnung in Form eines Phased-Array 101 aus mehreren gekrümmt verlaufenden streifenartigen optischen Wellenleitern 110 mit von Wellenleiter 110 zu Wellenleiter 110 variierender optischer Länge und
- eine Aus- und/oder Einkoppelanordnung 5 aus der Anzahl n der Kanäle λ1, λ2, ... λn gleichen Anzahl streifenartiger optischer Wellenleiter 21, 22, ... 2n, die beispielsweise zu den Wellenleitern 110 des Phased-Array 101 entgegengesetzt gekrümmt verlaufen, angeordnet.

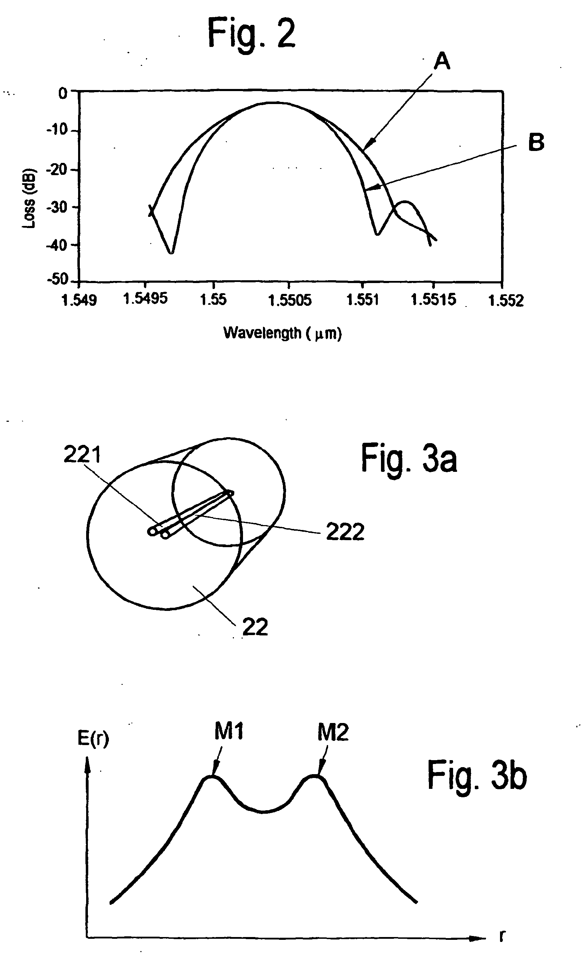

Von den streifenartigen optischen Wellenleitern 110 weist nach den Figuren 2 und 3 jeder je eine Endfläche 111 , die einer dem Phased-Array 101 zugekehrten Endfläche 102₂ des einen Schichtwellenleiters 102 gegenüberliegt, und je eine andere Endfläche 112 auf die einer dem Phased-Array 101 zugekehrten Endfläche 103₂ des anderen Schichtwellenleiters 103 gegenüberliegt.

Die von Wellenleiter 110 zu Wellenleiter 110 variierende optisch Länge L jedes Wellenleiters 110 ist zwischen der einen und anderen Endfläche 111 und 112 dieses Wellenleiters 110 gemessen und jeweils durch das Produkt aus einer effektiven Brechzahl jedes Wellenleiters 110.und dessen längsaxiale geometrische Länge zwischen dessen Endflächen 111 und 112 definiert.

Der eine. Schichtwellenleiter 102 weist eine vom Phased-Array 101 abgekehrte Endfläche 102₁ auf, die beispielsweise mit der einen Substratkante 41 abschließt und in der ein Punkt 11 liegt, durch den alle Kanäle λ1 bis λ10 in den einen Schichtwellenleiter 102 einkoppelbar und/oder aus diesem auskoppelbar sind.

Der andere Schichtwellenleiter 103 weist eine vom Phased-Array 101 abgekehrte und der Aus- und/oder Einkoppelanordnung 5 zugekehrte Endfläche 103₁ auf, in der pro Kanal λi (i = 1 bis 10) je ein separater Punkt 12ᵢ liegt, bei dem allein optische Leistung P dieses Kanals λi, die auf den Punkt 11 in der Endfläche 102₁ des einen Schichtwellenleiters 102 konzentriert ist und in diesen Schichtwellenleiter 102 eingekoppelt wird, vom Phased-Array 101 durch den anderen Schichtwellenleiter 103 rekonzentriert wird. Der Punkt 12ᵢ ist dem Kanal λi allein zugeordnet.

Umgekehrt wird optische Leistung P jedes Kanals λi, die bei dem diesem Kanal λi allein zugeordneten Punkt 12ᵢ in der Endfläche 103₁ des anderen Schichtwellenleiters 103 konzentriert ist und in diesen Schichtwellenleiter 103 eingekoppelt wird, vom Phased-Array 101 durch den einen Schichtwellenleiter 103 bei dem Punkt 11 in der Endfläche 102₁ dieses Schichtwellenleiters 102 rekonzentriert. Der Punkt 11 ist demnach allen Kanälen λi gemeinsam zugeordnet. Die Endfläche der Glasfaser 12 stellt den allen Kanälen gemeinsam zugeordneten Raumbereich darstellt.

Die rekonzentrierte optische Leistung eines Kanals λi kann von der eingekoppelten konzentrierten optischen Leistung P abweichen und ist deshalb mit P' bezeichnet.

Das Phased-Array 101 bildet zusammen mit den Schichtwellenleitern 102 und 103 die optische Gittereinrichtung 10 des Beispiels nach Figur 6, wobei der Punkt 11 der allen Kanälen λi gemeinsam zugeordnete Raumpunkt der Gittereinrichtung und jeder separate Punkt 2i ein Raumpunkt der Gittereinrichtung 10 ist, der dem Kanal λi allein zugeordnet ist.

Das Phased-Array 101 bildet ein optisches Gitter der Gittereinrichtung 10 in Form eines Phasengitters, der eine Schichtwellenleiter 102 einen optischen Freistrahlbereich der zwischen dem allen Kanälen λi gemeinsam zugeordneten Raumpunkt 11 und dem Gitter 101 angeordnet ist, und der andere Schichtwellenleiter 103 einen optischen Freistrahlbereich, der zwischen dem Gitter 101 und jedem einem Kanal λi allein zugeordneten Punkt 12ᵢ angeordnet ist.

Die Aus- und/oder Einkoppelanordnung 5 weist pro Kanal λi je einem diesem Kanal λi allein zugeordneten streifenartigen optischen Wellenleiter 2i mit einer Endfläche 20i auf, die bei dem diesem Kanal λi allein zugeordneten Raumpunkt 12ᵢ angeordnet ist und durch welche die bei diesem Punkt 12ᵢ rekonzentrierte optische Leistung P' dieses Kanals λi zumindest teilweise in diesen Wellenleiter 2i einkoppelt wenn die Anordnung als Demultiplexer betrieben ist.

Jeder Wellenleiter 2i der Aus- und/oder Einkoppelanordnung 5 weist eine von der Gittereinrichtung 10 mitbestimmte wellenlängenabhängige Transmissionsfunktion Λi auf.

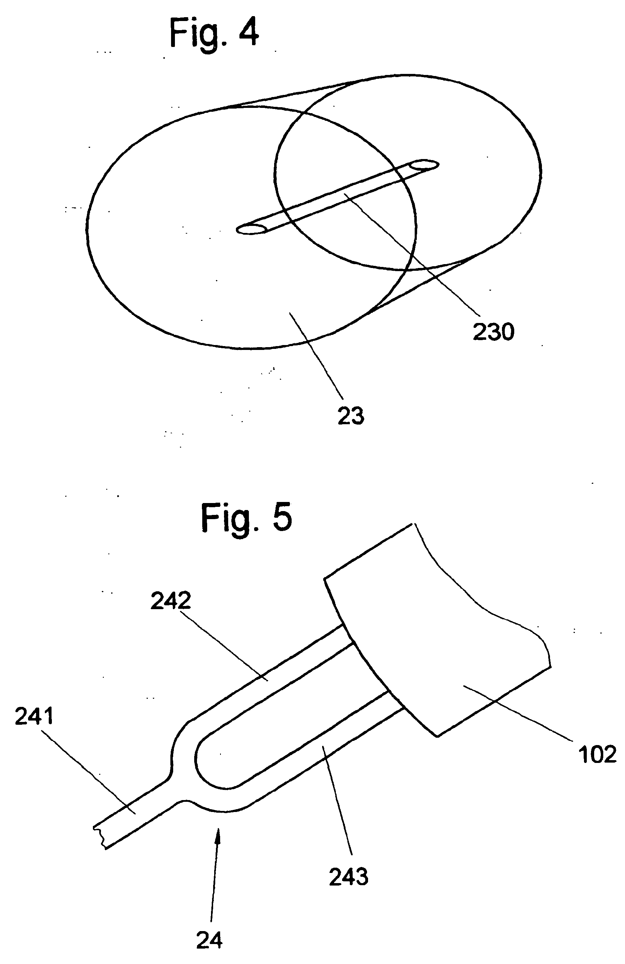

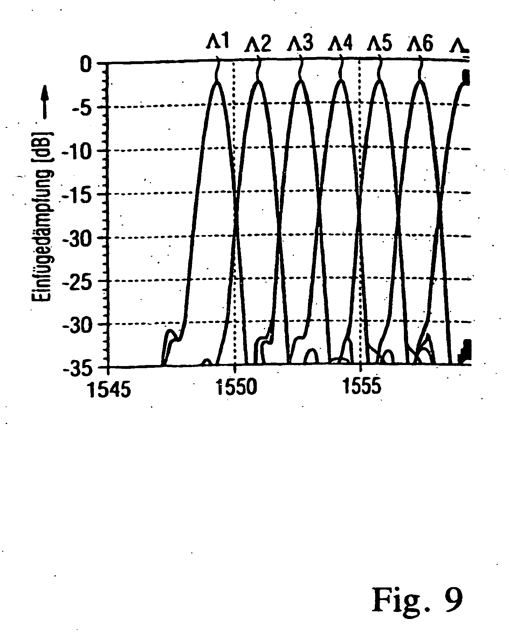

In der Figur 9 sind für den Fall i = 1 bis 8 anstelle von 1 bis 10 typische wellenlängenabhängige Transmissionsfunktionen Ai der Wellenleiter 2i der Aus- und/oder Einkoppelanordnung 5 des Beispiels nach Figur 5 dargestellt. Auf der Abszisse ist die optische Wellenlänge λ, auf der Ordinate die Einfügedämpfung aufgetragen. Jede Transmissionsfunktion Λi gehört allein zum Wellenleiter 2i und Kanal λi. Das Beispiel ist für einen Kanalabstand von 200 GHz ausgelegt.

Jede dieser Transmissionsfunktionen Λi ist einer Gauß-Funktion ähnlich.

Beim Betrieb dieser Anordnung als Demultiplexer wird optische Leistung P jedes zu trennenden Kanals λi durch den Wellenleiter 20 dem allen Kanälen gemeinsam zugeordneten Raumpunkt 11 zugeführt und zu dem diesem Kanal λi allein zugeordneten Wellenleiter 2i übertragene optische Leistung P' dieses Kanals λi aus diesem Wellenleiter 2i entnommen. Beim Betrieb als Multiplexer wird optische Leistung P jedes zusammenzuführenden Kanals λi durch den diesem Kanal λi allein zugeordneten Wellenleiter 2i nur dem diesem Kanal λi allein zugeordneten Raumpunkt zugeführt und zu dem allen Kanälen λi zugeordneten Wellenleiter 20 übertragene optische Leistung P' dieses Kanals λi aus diesem Wellenleiter 20 entnommen.

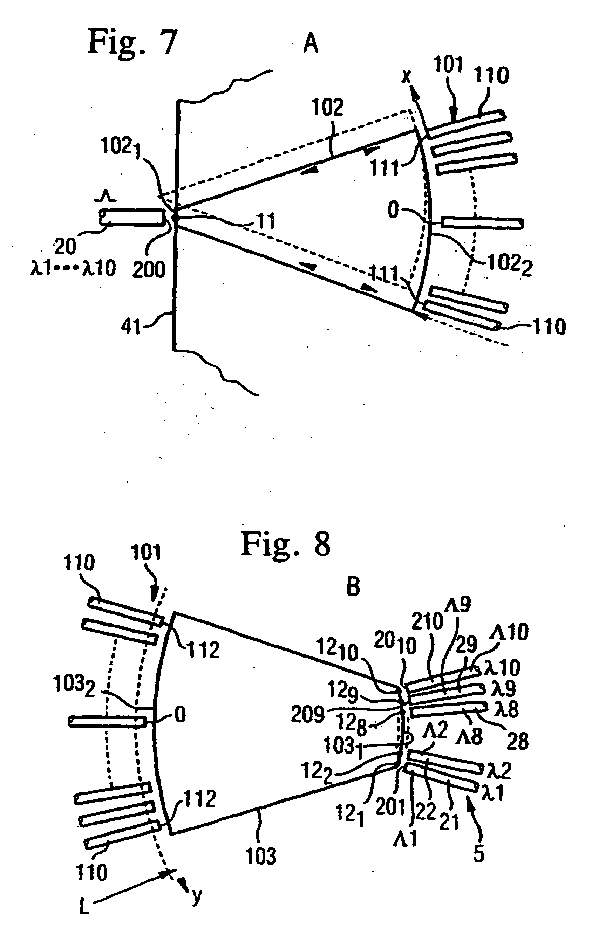

Dabei weisen die Freistrahlbereiche 102 und 103 jeweils eine Linsenwirkung auf und vermitteln eine Fourier-Transformation. Eine auf den Raumpunkt 11 konzentrierte optische Feldverteilung wird nach Einkopplung in den Freistrahlbereich 102 räumlich auf die längs einer Linie x (Figur 7) angeordneten einen Endflächen 111 der Wellenleiter 110 des Phased-Array 101 verteilt, wobei die Feldverteilung entlang der Linie x mit der konzentrierten Feldverteilung im Punkt 11 verknüpft ist.

In jeden Wellenleiter 110 des Phased-Array 101 wird ein Anteil der den einen Endflächen 111 zugeführten optischen Leistung P eingekoppelt und zur anderen Endfläche 112 dieses Wellenleiters 110 übertragen. Dadurch ist an jeder anderen Endfläche 112 je eine auf diese Fläche 112 konzentrierte einzelne optische Feldverteilung vorhandenen. Die anderen Endflächen 112 sind längs einer Linie y (Figur 8) angeordnet. Die einzelnen Feldverteilungen in den anderen Endflächen 112 weisen längs der Linie y eine Einhüllende auf, die gleich der Feldverteilung entlang der Linie x ist. Die anderen Endflächen 112 bilden in diesem Fall die Austrittsöffnungen des Gitters 101, das bewirkt, daß für jeden Kanal λi die aus allen anderen Endflächen 112 austretende optische Leistung P' dieses Kanals λi im Freistrahlbereich 103 übertragen und bei dem Punkt 12i konzentriert wird, der diesem Kanal λi allein zugeordnet ist.

Die bei diesem Punkt 12i konzentrierte optische Feldverteilung und die Einhüllende längs der Linie y sind jeweils durch eine Fourier-Transformierte miteinander verknüpft. Ähnliches gilt für den umgekehrten Fall, bei dem die Leistung P von einem Punkt 2i ausgeht und über eine Hüllkurve längs der Linie x beim Punkt 11 rekonzentriert wird, d.h. im Multiplexfall.

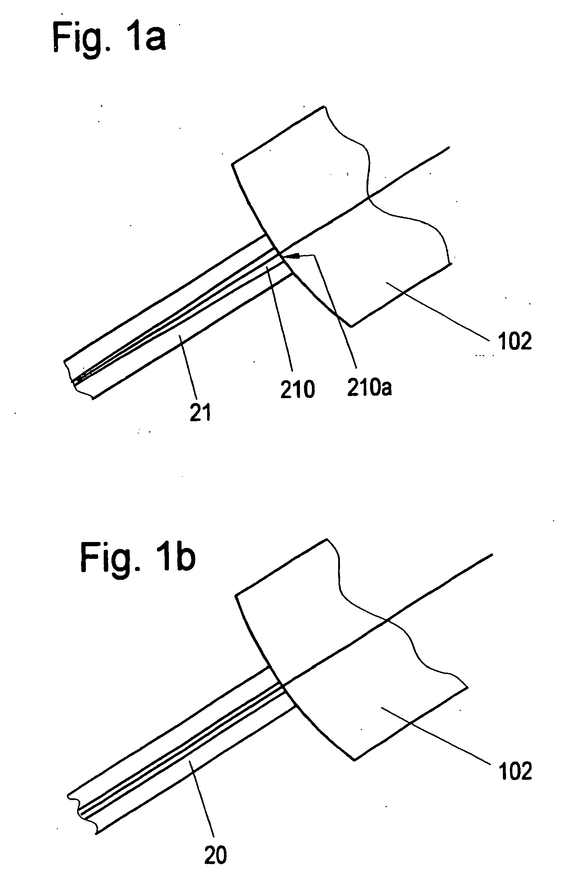

In Figur 1 ist eine erfindungsgemäße Einkoppelvorrichtung dargestellt, die anstelle des Lichtleiters 20 der Figur 6 Licht in den ersten Freistrahlbereich 102 einkoppelt. Der eigentliche Multiplexer/Demultiplexer ist unverändert.

Die Einkoppelvorrichtung weist eine Monomode-Lichtfaser 21 auf, die mechanisch mit dem ersten Freistrahlbereich 102 gekoppelt ist. Hierzu wird die Lichtfaser bis auf einen minimalen Spalt (nicht dargestellt) bis direkt an die Substratoberflächenkante, an der der erste Freistrahlbereich 102 ausgebildet ist, herangeführt und das Licht direkt in den Freistrahlbereich 102 eingestrahlt. Die Lichtfaser 21 dient somit als Einkoppelfaser bzw., bei umgekehrtem Strahlenverlauf, als Auskoppelfaser.

Die Kerngeometrie der Lichtfaser 21 weicht von der Geometrie einer Standard-Monomode-Lichtfaser ab, die in Figur 1b zum Vergleich dargestellt ist. So weist die Lichtfaser 21 einen Kern 210 auf, der sich in Richtung des ersten Freistrahlbereichs 102 verbreitert, d.h. getapert ist. Damit liegt im Bereich der Ankopplung an den ersten Freistrahlbereich 102 ein vergrößerter Modenfelddurchmesser des Kernes 210 vor. Die Stirnfläche 210a des vergrößerten Kernes 210, von der Licht direkt in den ersten Freistrahlbereich 102 eingestrahlt wird, stellt dabei einen Raumbereich 11 dar, der allen Wellenlängenkanälen gemeinsam zugeordnet ist.

Aufgrund des vergrößerten Modenfelddurchmessers der Lichtfaser 21 und der vergrößerten Stirnfläche 210a liegt eine verbreiterte Feldverteilung in der Einkoppelvorrichtung und damit am Eingang des ersten Freistrahlbereichs 102 vor. Diese verbreiterte Feldverteilung wird auf den Ausgang des zweiten Freistrahlbereichs 103 bzw. den jedem Kanal λi allein zugeordneten Raumbereich 12ᵢ abgebildet. Hierdurch wird eine gewünschte, abgeflachte Transmissionscharakteristik erreicht.

Dies ist beispielhaft in Figur 2 dargestellt. Figur 2 zeigt die Einfügedämpfung bzw. Transmissionskurve für einen Kanal im Wellenlängenbereich bei 1550 nm zum einen für eine Standard-Monomode-Faser als Einkoppelfaser gemäß Figur 1b (Kurve B) und zum anderen für eine erfindungsgemäße Monomode-Faser 21 mit verbreitertem Modenfelddurchmesser gemäß Figur 1a (Kurve A), wobei der Durchmesser des Kerns 210 im Koppelbereich gleich dem zweifachen des normalen Durchmessers ist, beispielsweise von 10 µm auf 20 µm verbreitert ist. Dabei ergibt sich, daß der durch ein 1 dB Schwächung definierte Passband (1 dB Bandbreite) sich von 0,19 nm auf 0,23 nm verbreitert. Dies entspricht einer Erhöhung des Passbands um etwa 20%.

Die Herstellung eines verbreiteren Kernbereichs/Modenfelddurchmessers in der Einkoppelfaser 21 erfolgt in an sich bekannter Weise insbesondere über Erhitzen und/oder Stauchen und/oder Aufquellen der Lichtfaser. Beispielsweise wird der dotierte Kern erhitzt, wobei die Dotierung in den Mantelbereich diffundiert und somit der Kern vergrößert wird. Dieses Verfahren kann vorteilhaft lediglich an gewünschten Lichtleiterbereichen vorgenommen werden, im vorliegenden Fall vor der Einkopplung des Lichts in den ersten Freistrahlbereich 102.

Es wird darauf hingewiesen, daß die Geometrie des Tapers so gewählt wird, daß die Leistung in dem Grundmode nicht wesentlich geändert wird.

In der Figur 3a ist ein alternatives Ausführungsbeispiel dargestellt, bei dem die Einkoppelvorrichtung eine Monomode-Lichtfaser 22 auf, die zwei lichtführende Kerne 221, 222 aufweist. Es wird dabei bevorzugt von jedem Kern 221, 222 nur der Grundmode übertragen.

Die beiden lichtführenden Kerne enthalten die gleichen Lichtsignale. Die Feldverteilung der einzelnen Kerne 221, 222 überlagert sich am Ausgang des Lichtfaser 22 bzw. am Eingang des ersten Freistrahlbereich 102 zu einer verbreiterten Feldverteilung gemäß Figur 3b, die ein doppeltes Maximum M1, M2 aufweist. Somit wird die Transmissionskurve für jeden Kanal gegenüber dem Stand der Technik verbreitert.

In Figur 4 ist vorgesehen, als Einkoppelvorrichtung eine Monomode-Lichtfaser 23 mit einem im Schnitt elliptischen Kern 230 zu verwenden. Auch das von dem elliptischen Kern 230 direkt in den ersten Freistrahlbereich 102 eingestrahlte Licht weist eine verbreiterte Feldverteilung auf, die wiederum zu einer verbreiterten Feldverteilung und damit zu einer verbesserten Transmissionskurve führt.

In Figur 5 ist ein Ausführungsbeispiel dargestellt, bei dem die Einkoppelövorrichtung eine Y-förmige Wellenleiterstruktur aufweist. Hierzu ist ein Y-Verzweiger 24 vorgesehen, dessen einzelnes Ende 241 mit einem Wellenleiter und dessen beiden parallelen Enden 242, 243 mit dem ersten Freistrahlbereich 102 gekoppelt sind. Ähnlich wie bei dem Ausführungsbeispiel der Figur 3a ergibt sich dabei eine verbreiterte Feldverteilung, die ein doppeltes Maximum aufweist. Je nach Ausführung des dem Substrat bzw. Chip zugewandten "Y" lassen sich unterschiedliche Transmissionscharakteristiken einstellen.

Die obigen Ausführungsbeispiele können auch kombiniert, beispielsweise ein erhöhter Kerndurchmesser gemäß Figur 1 auch an den dem Substrat zugewandten Armen des Y-Verzweigers der Figur 5 vorgesehen werden.

Abschließend wird darauf hingewiesen, daß die erfindungsgemäße Einkoppelvorrichtung die Vorteile bekannter Verfahren zur Modifikation der Filterkurven beibehält und mit den bereits bekannten Verfahren auch kombiniert werden kann. So ist etwa das Konzept der aktiven Justage zur Einstellung der vorgegenenen Wellenlängen an den Aüsgangswellenleitern (21, 22, ...2n) bei der Erfindung realisierbar, d.h. die Justage erfolgt während einer Lichtübertragung über die jeweiligen Lichtwellenleiter.

Weiter erlaubt die erfindungsgemäße Lösung das Verfahren der passiven Temperaturkompensation, bei dem eine temperaturbedingte Verschiebung der Feldverteilung am Eingang des ersten Freistrahlbereichs durch ein entsprechende Verschiebung am Ausgang des Multiplexers/Demultiplexers kompensiert wird.

Auch erlaubt der erfindungsgemäße Multiplexer/Demultiplexer die Verwendung bereits bekannter Aufbau- und Montagetechnik zum Einbringen der Ein- und Auskoppelvorrichtungen an dem Substrat/Chip, das den Phased Array enthält.

Die Erfindung weist des weiteren den Vorteil auf, daß für einen bestimmten Kanalabstand nur noch ein Chiptyp mit einer bestimmten Transmissionscharakteristik und 1dB Bandbreite verwendet werden muß, wobei Unterschiede in der Transmissionscharakteristik bzw. 1 dB Bandbreite über die erfindungsgemäße Einkoppelvorrichtung am Chip-Eingang hergestellt werden. Über die erfindungsgemäße Einkoppelvorrichtung kann beispielsweise eine 1 dB Bandbreite von 30 GHz oder eine 1 dB Bandbreite von 50 GHz eingestellt werden. Zur Bereitstellung derartiger Bandbreiten war es bisher erforderlich, zwei unterschiedliche Chips mit unterschiedlichem Multiplexer/Demultiplexer herzustellen (sogenannte Low-Loss-Chips und Flat-Top Chips). Somit ermöglicht die Erfindung, auf die Wünsche eines Nutzers flexibler eingehen zu können.

Die Erfindung beschränkt sich in ihrer Ausführung nicht auf die vorstehend erläuterten Ausführungsbeispiele. Wesentlich für die Erfindung ist allein, die die Kopplungsmittel bzw. die Einkoppelvorrichtung zur Ein- oder Auskopplung von Licht in den ersten optischen Freistrahlbereich zumindest in der Ebene des Freistrahlbereichs eine Abflachung und/oder Verbreiterung der Feldverteilung des ein- oder ausgekoppelten Lichts bewirken.

## Patentansprüche

1. Anordnung zum Multiplexen und/oder Demultiplexen der Signale mindestens zweier optischer Wellenlängenkanäle (λ1, λ2, ... λn) mit
- einer auf der Oberfläche (40) eines Substrats (4) ausgebildeten optischen Gittereinrichtung (10), die
- eine optische Leistung (P) jedes Kanals (λ1; λ2; ... λn), die einem bestimmten, allen Kanälen (λ1, λ2, ... λn) gemeinsam zugeordneten Raumbereich (11) zugeführt ist, in
- eine optische Leistung (P') transformiert, die bei einem bestimmten separaten, diesem Kanal (λ1; λ2; ... λn) allein zugeordneten Raumbereich (12₁, 12₂, ...12ₙ) konzentriert ist, und/oder umgekehrt,
- wobei die optische Gittereinrichtung aufweist:
- ein optisches Gitter (101),
- einen ersten optischen Freistrahlbereich (102), der zwischen dem allen Kanälen (λ1, λ2, ... λn) gemeinsam zugeordneten Punkt (11) und dem Gitter (101) angeordnet ist, und
- einen zweiten optischen Freistrahlbereich (103), der zwischen dem Gitter (101) und jedem einem Kanal (λ1; λ2; ... λn) allein zugeordneten Raumbereich (12₁; 12₂; ... 12ₙ) angeordnet ist,
- wobei das Gitter (11) aus mehreren streifenartigen optischen Wellenleitern (110) besteht, deren jeder
- je eine Endfläche (111), die dem allen Kanälen (λ1, λ2, ... λn) gemeinsam zugeordneten Bereich (11) zugekehrt ist,
- je eine andere Endfläche (112), die den Punkten (12₁; 12₂; ... 12ₙ) zugekehrt ist, deren jeder je einem Kanal (λ1; λ2; ... λn) allein zugeordnet ist, und
- je eine optische Länge (L) zwischen der einen (111) und anderen Endfläche (112), die von Wellenleiter (110) zu Wellenleiter (110) variiert,
aufweist,
- Kopplungsmitteln zur Ein- oder Auskopplung von Licht aller Kanäle in den ersten Freistrahlbereich (102), die zumindest in der Ebene des Freistrahlbereichs (102) eine Abflachung und/oder Verbreiterung der Feldverteilung des ein- oder ausgekoppelten Lichts bewirken, wobei das ein- oder ausgekoppelte Licht den allen Kanälen gemeinsam zugeordneten Raumbereich (11) durchläuft und wobei die Kopplungsmittel einen Wellenleiter (21) zur Ein- oder Auskopplung von Licht aller Kanäle in den ersten Freistrahlbereich (102) umfassen, und
- pro Kanal (λ1; λ2; ... λn) je einem diesem Kanal (λ1; λ2; ... λn) allein zugeordneten Wellenleiter (21, 22, ...2n), der jeweils mit dem zweiten Freistrahlbereich gekoppelt ist,
- wobei der erste Freistrahlbereich (102) an einer Substratkante (41) angeordnet und der Wellenleiter (21) der Kopplungsmittel durch eine externe Glasfaser gebildet ist, die mit der Substratkante (41) gekoppelt ist
**dadurch gekennzeichnet, dass** von den vorhandenen Wellenleitern nur der Wellenleiter (21) zur Ein- oder Auskopplung von Licht aller Kanäle in den ersten Freistrahlbereich (102) getapert ist.

2. Anordnung nach Anspruch 1, **dadurch**
**gekennzeichnet , daß** der Wellenleiter (21) im Bereich vor der Ankopplung an den ersten Freistrahlbereich (102) eine kontinuierliche Vergrößerung des Kerndurchmessers (210) aufweist.

3. Anordnung nach Anspruch 1, **dadurch**
**gekennzeichnet , daß** der Wellenleiter zwei parallele, zueinander beabstandete Wellenleiterkerne (221, 222) aufweist, die beide mit dem ersten Freistrahlbereich (102) gekoppelt sind.

4. Anordnung nach Anspruch 3, **dadurch**
**gekennzeichnet , daß** die beiden Kerne (221, 222) einen Abstand von 10 bis 20 µm aufweisen.

## Claims

1. Arrangement for multiplexing and/or demultiplexing the signals of at least two optical wavelength channels (λ1, λ2, ... λn), having
- an optical grating device (10), which is formed on the surface (40) of a substrate (4) and
- transforms an optical power (P) of each channel (λ1; λ2; ... λn), which is fed to a specific region of space (11) assigned in common to all channels (λ1, λ2, ... λn), into
- an optical power (P') that is concentrated in a specific separate region of space (12₁, 12₂, ... 12ₙ) assigned to this channel (λ1; λ2; ... λn) alone, and/or vice versa
- the optical grating device having
- an optical grating (101),
- a first optical free beam region (102) that is arranged between the point (11) assigned in common to all channels (λ1, λ2, ... λn) and the grating (101), and
- a second optical free beam region (103) that is arranged between the grating (101) and each region of space (12₁, 12₂, ... 12ₙ) assigned to one channel (λ1; λ2; ... λn) alone,
- wherein the grating (11) consists of multiple strip-like optical waveguides (110), each of which comprises
- one end face (111) each, which faces the region (11) assigned in common to all channels (λ1; λ2; ... λn),
- one other end face (112), which faces the points (12₁; 12₂; ... 12ₙ), to each of which one channel (λ1; λ2; ... λn) each is assigned alone, and
- one optical length (L) each between the one (111) and the other end face (112), which varies from waveguide (110) to waveguide (110),
- coupling means for coupling light of all channels into or out of the first free beam region (102), which, at least in the plane of the free beam region (102), effect a flattening and/or widening of the field distribution of the light coupled in or out, the light coupled in or out traversing the region of space (11) assigned in common to all channels, and wherein the coupling means comprise a waveguide (21) for coupling light of all channels into or out of the first free beam region (102),
- per channel (λ1; λ2; ... λn), one waveguide (21, 22, ...2n) each assigned to this channel (λ1; λ2; ... λn) alone, which is coupled in each case to the second free beam region,
- the first free beam region (102) being arranged at a substrate edge (41) and the waveguide (21) of the coupling means being formed by an external glass fiber, which is coupled to the substrate edge (41),
**characterized in that** of the existing waveguides only the waveguide (21) for coupling light of all channels into or out of the first free beam region (102) is tapered.

2. The arrangement as claimed in Claim 2, **characterized in that** the waveguide (21) has a continuous enlargement of the core diameter (210) in the region before the coupling to the first free beam region (102).

3. The arrangement as claimed in Claim 1, **characterized in that** the waveguide has two parallel waveguide cores (221, 222) spaced apart from one another that are both coupled to the first free beam region (102).

4. The arrangement as claimed in Claim 3, **characterized in that** the two cores (221, 222) have a spacing of 10 to 20 µm.

5. The arrangement as claimed in Claim 1, **characterized in that** the waveguide (23) has an elliptical core (230).

6. The arrangement as claimed in Claim 1, **characterized in that** the waveguide has a Y-coupler (24), whose single end (241) is coupled to a further waveguide, and whose two parallel ends (242, 243) are coupled to the first free beam region (102).

## Revendications

1. Système pour multiplexer et/ou démultiplexer des signaux d'au moins deux canaux de longueurs d'onde optiques (λ1, λ2, .... λn) avec
- un dispositif de réseau optique (10) formé à la surface (40) d'un substrat (4), laquelle transforme
- une puissance optique (P) de chaque canal (λ1, λ2, .... λn), qui est fournie à une zone spatiale (11) définie associée en commun à tous les canaux (λ1, λ2, .... λn), en une puissance optique (P') qui est concentrée en une zone spatiale (12₁ ; 12₂ ; .... 12ₙ) définie séparée est associée uniquement à ce canal (λ1, λ2, .... λn), et/ou inversement,
- dans lequel l'installation de réseau optique comprend :
- un réseau optique (101),
- une première zone de propagation libre optique (102) qui est disposée entre le point (11) associé en commun à tous les canaux (λ1, λ2,.... λn) et le réseau (101), et
- une seconde zone de propagation libre optique (103) qui est disposée entre le réseau (101) et chaque zone spatiale (12₁; 12₂; .... 12ₙ) associée uniquement à un canal (λ1, λ2, .... λn),
- dans lequel le réseau (11) est composé de plusieurs guides d'ondes (110) optiques de type bandes, dont chacun présente :
- une surface terminale (111) respective qui est adjacente à la zone (11) associée en commun à tous les canaux (λ1, λ2, .... λn),
- une autre surface terminale (112) respective qui est adjacente aux points (12₁ ; 12₂ ; .... 12ₙ) dont chacun est associé seulement à un canal (λ1, λ2, .... λn) respectif, et
- une longueur optique (L) respective entre l'une surface terminale (111) et l'autre surface terminale (112) qui varie de guide d'ondes (110) à guide d'ondes (110),
- des moyens de couplage pour coupler et découpler la lumière de tous les canaux dans la première zone de propagation libre (102) qui provoquent au moins dans le plan de la zone de propagation libre (102) un aplatissement et/ou élargissement de la répartition du champ de la lumière couplée ou découplée, moyennant quoi la lumière couplée ou découplée parcourt la zone spatiale (11) associée en commun à tous les canaux, et moyennant quoi les moyens de couplage comportent un guide d'ondes (21) pour le couplage et le découplage de lumière de tous les canaux dans la première zone de propagation libre (102), et
- un guide d'ondes (21, 22, ...2n) par canal (λ1, λ2, .... λn) associé chacun à un canal respectif (λ1, λ2, .... λn), qui est couplé respectivement à la seconde zone de propagation libre,
- moyennant quoi 1a première zone de propagation libre (102) est disposée sur une arête de substrat (41) et le guide d'ondes (21) des moyens de couplage est formé par une fibre de verre externe qui est couplée avec l'arête de substrat (41),
**caractérisé en ce que** parmi les guides d'onde précités seul le guide d'ondes (21) pour coupler ou découpler la lumière de tous les canaux est raccordé en queue de rat dans la première zone de propagation libre (102).

2. Dispositif selon la revendication 1, **caractérisé en ce que** le guide d'ondes (21) comprend dans la zone avant le couplage à la première zone de propagation libre (102) un agrandissement continu du diamètre de noyau (210).

3. Dispositif selon la revendication 1, **caractérisé en ce que** le guide d'ondes comprend deux noyaux de guide d'ondes (221, 222) parallèles séparés l'un de l'autre qui sont tous deux couplés avec la première zone de propagation libre (102).

4. Dispositif selon la revendication 3, **caractérisé en ce que** les deux noyaux (221, 222) présentent un espacement de 10 à 20 µm.

5. Dispositif selon la revendication 1, **caractérisé en ce que** le guide d'ondes comprend un noyau elliptique (230).

6. Dispositif selon la revendication 1, **caractérisé en ce que** 1c guide d'ondes comprend un point de branchement en Y (24) dont l'extrémité individuelle (241) est couplée avec un autre guide d'ondes, et dont les deux extrémités parallèles (242, 243) sont couplées avec la première zone de propagation libre (102).
